# EUROPÄISCHE PATENTSCHRIFT

(11) **EP 1 555 286 B1**
(45) Veröffentlichungstag und Bekanntmachung des Hinweises auf die Patenterteilung: **14.12.2016**
(21) Anmeldenummer: 05007388.1
(22) Anmeldetag: 15.10.2003
(51) Int. Cl.: C01F 7/02, C01F 7/44, C08K 3/00, C08K 3/22, H01B 7/295, C09C 1/40, C09K 21/02, C09K 21/14

(54) **VERFAHREN ZUR HERSTELLUNG EINES FLAMMSCHUTZMITTELS UND VERFAHREN ZUR HERSTELLUNG EINER FLAMMGESCHÜTZTEN POLYMERZUSAMMENSETZUNG**
PROCESS FOR PREPARATION OF A FLAME RETARDANT AND PROCESS FOR PREPARATION OF A FLAME RETARDANT POLYMER COMPOSITION
PROCÉDÉ POUR LA PRÉPARATION D'UN IGNIFUGE ET PROCÉDÉ POUR LA PRÉPARATION D'UNE COMPOSITION IGNIFUGE DE POLYMÈRE

(30) Priorität: 16.10.2002 DE 10248174
(43) Veröffentlichungstag der Anmeldung: 20.07.2005
(62) Teilanmeldung aus: 03023084.1
(73) Patentinhaber: Nabaltec AG, 92421 Schwandorf (DE)
(72) Erfinder: Sauerwein, Reiner, Dr., 92449 Steinberg (DE); Prescher, Dieter, Dr., 92421 Schwandorf (DE); Brandl, Josef, 93158 Teublitz (DE); Gokorsch, Hans, 92421 Schwandorf (DE)
(74) Vertreter: Büchel, Edwin

(56) Entgegenhaltungen:
- EP-A1- 0 253 635
- EP-A1- 0 796 660
- EP-A2- 0 347 948
- US-A- 5 130 113
- ALTENBURGER MASCHINEN JÄCKERING GMBH: "ULTRA ROTOR, SUPER ROTOR; Solutions for Complex Grinding Problems", INTERNET CITATION, 1998, Seiten 1-12, XP002491880, Gefunden im Internet: URL:http://www.jaeckering.com/de/pdf/Jaeck ering_Altenburger_Maschinen.pdf [gefunden am 2008-08-21]

## Beschreibung

Die Erfindung betrifft ein Verfahren zur Herstellung eines Flammschutzmittels und Verfahren zur Herstellung einer flammgeschützten Polymerzusammensetzung.

In der Bau-, Möbel-, Transport- oder Elektro- sowie Elektronikindustrie werden Kunststoffe als Werkstoff eingesetzt. Für viele Anwendungen müssen die Polymere nationale oder internationale Flammschutznormen erfüllen. Da die meisten Polymere von sich aus brennbar sind, müssen sie modifiziert werden, um als flammgeschützt eingestuft werden zu können. Im allgemeinen wird dies durch den Zusatz organischer oder anorganischer Flammschutzmittel erreicht. Innerhalb der Vielzahl verschiedener Flammschutzmittel haben Metallhydrate, besonders die des Aluminiums, eine wichtige Bedeutung erlangt (G. Kirschbaum, Kunststoffe; 79, 1999, 1205-1208 und R. Schmidt, Kunststoffe, 88, 1998, 2058-2061).
Die flammschützende Wirkung des Aluminiumhydroxids beruht auf der thermischen Abspaltung des chemisch gebundenen Wassers zwischen 200 - 400°C. Während dieser endothermen Zersetzung des Hydroxids wird Energie verbraucht und damit die Oberfläche des Kunststoffs gekühlt. Zusätzlich verdünnt der freigesetzte Wasserdampf die brennbaren organischen Abbauprodukte der Polymere. Das als Rückstand verbleibende Aluminiumoxid adsorbiert polyzyklische, aromatische Verbindungen, die beim Verbrennen der Polymermatrix entstehen. Da diese Verbindungen Bestandteil von schwarzem Brandrauch sind, trägt Aluminiumhydroxid auch zu einer Reduktion der Rauchgasdichte im Brandfall bei. Bei Einsatz des ungiftigen und halogenfreien Aluminiumhydroxids lassen sich somit halogenfreie und rauchgasarme Kunststoffcompounds herstellen.

Nachteilig sind die hohen Einsatzmengen, mit denen Aluminiumhydroxid in Kunststoffen verwendet werden muss, um die diversen Flammschutznormen erfüllen zu können. Aufgrund dieser hohen Füllgrade gestalten sich Verarbeitungsprozesse solcher flammgeschützten Polymermischungen, wie z.B. die Extrusion, schwierig, und die mechanischen Eigenschaften dieser Compounds sind oft ungenügend.
Die Extrusionsgeschwindigkeit während der Beschichtung von Kupferadern oder dem Aufbringen des Kabelmantels auf eine Kabelkonstruktion ist ein wichtiger Kostenfaktor bei der Herstellung von Kabeln. Mit feinstgefällten Aluminiumhydroxiden gefüllte Polymercompounds, die neben den gängigen elektrischen, mechanischen und flammschutztechnischen Anforderungen auch die einer hohen Extrusionsgeschwindigkeit erfüllen, sind ein Schlüssel dafür, dass halogenfrei flammgeschützte Kabel weitere Marktanteile gegenüber alternativen Technologien gewinnen.

Eine Möglichkeit zur Verbesserung ist, auf das Aluminiumhydroxid eine Schicht aus organischen Additiven z.B. Silanen und/oder Titanaten aufzubringen. Arbeitet man diese beschichteten (gecoateten) Aluminiumhydroxide in Thermoplaste ein, erreicht man deutlich höhere Extrusionsgeschwindigkeiten.

Aufgabe der vorliegenden Erfindung ist die Entwicklung eines Verfahrens zur Herstellung von Flammschutzmitteln und eines Verfahrens zur Herstellung von flammgeschützten Polymerzusammensetzungen, mit denen sich eine Polymerzusammensetzung mit hohen Füllgraden an feinstgefälltem Aluminiumhydroxid erreichen lässt, welche die oben beschriebenen Nachteile nicht zeigt, sondern bei Füllgraden bis 80% noch gut verarbeitbar ist. Das Herstellungsverfahren soll im Vergleich zu bekannten Coatierungsverfahren einfacher und kostengünstiger sein.

Gelöst wird die Aufgabe durch ein Verfahren zur Herstellung eines Flammschutzmittels, das entweder ein Aluminiumhydroxid mit den Stoffwerten
- spezifische Oberfläche nach BET 3 - 5 m²/g
- mittlerer Korndurchmesser d₅₀ 1,0 - 1,5 µm
- Restfeuchte 0,1 - 0,4 %
- Ölzahl 19 - 23 %
- Wasseraufnahme. 0,4 - 0,6 ml/g
oder ein Aluminiumhydroxid mit den Stoffwerten
- spezifische Oberfläche nach BET 5 - 8 m²/g
- mittlerer Korndurchmesser d₅₀ 0,8 - 1,3 µm
- Restfeuchte 0,1 - 0,6 %
- Ölzahl 21 - 25 %
- Wasseraufnahme 0,6 - 0,8 ml/g
ist, dadurch gekennzeichnet, dass ein durch Fällung und Filtration gewonnenes filterfeuchtes Aluminiumhydroxid mit einem mittleren Korndurchmesser von 0,8 - 1,5 µm in einem turbulenten Heißluftstrom einer Mahltrocknung unterzogen wird, wobei ein Mahltrocknungsaggregat verwendet wird, bei dem sich ein fest auf einer massiven Welle montierter Rotor mit einer Umfangsgeschwindigkeit von 40 - 140 m/sek dreht, wobei in Verbindung mit einem hohen Luftdurchsatz von 3000 - 7000 Bm³/h die durchströmende Heißluft von 150 - 450°C mit einer Reynoldszahl > 3000 verwirbelt wird, wobei unter weitgehender Beibehaltung der Korngrößenverteilung die BET-Oberftäche um mindestens 20 % vergrößert wird.

Die Aufgabe wird ebenfalls gelöst durch ein Verfahren zur Herstellung einer flammgeschützte Polymerzusammensetzung durch Vermischen von
a) 20 - 60 Gew.-% eines thermoplastischen und/oder vernetzten oder vernetzbaren und/oder elastomeren Polymeren, und
b) 40 - 80 % eines Flammschutzmittels hergestellt nach einem Verfahren gemäß einem der Ansprüche 1-3, das entweder ein Aluminiumhydroxid mit den Stoffwerten
   - spezifische Oberfläche nach BET 3 - 5 m²/g
   - mittlerer Korndurchmesser d₅₀ 1,0 - 1,5 µm
   - Restfeuchte 0,1 - 0,4 %
   - Ölzahl 19 - 23 %
   - Wasseraufnahme 0,4 - 0,6 ml/g
   oder ein Aluminiumhydroxid mit den Stoffwerten
   - spezifische Oberfläche nach BET 5 - 8 m²/g
   - mittlerer Korndurchmesser d₅₀ 0,8 - 1,3 µm
   - Restfeuchte 0,1 - 0,6 %
   - Ölzahl 21 - 25 %
   - Wasseraufnahme 0,6 - 0,8 ml/g ist.

Dieses Ziel wurde durch die erfindungsgemäßen Verfahren unter Einsatz von feinst gefälltem Aluminiumhydroxid erreicht, das einer speziellen Mahltrocknungsprozedur unterzogen wurde. Das verwendete Mahltrocknungsaggregat besteht aus einem fest auf einer massiven Welle montierten Rotor, der sich mit hoher Peripheriegeschwindigkeit dreht. Diese Drehbewegung in Verbindung mit einem hohen Luftdurchsatz versetzt die durchströmende Heißluft in extrem schnelle Luftwirbel, die das Trocknungsgut aufnehmen und es beschleunigen. Dabei wird es so behandelt, dass das Trockengut eine vergrößerte Oberfläche nach BET aufweist. Die in Turbulenz versetzten Aluminiumhydroxidpartikel verlassen nach vollständigem Abtrocknen das Mahltrocknungsaggregat und werden von der Heißluft sowie den Brüden abgetrennt. Die Umfangsgeschwindigkeit des Rotors beträgt zwischen 40 - 140 m/sek. Die zur Trocknung verwendete Heißluft hat eine Temperatur von 150 - 450°C. Es können bekannte Mahltrocknungsaggregate verwendet werden, siehe bspw. Lueger, Lexikon der Technik, Bd 48, S.394.

Die auf diese Weise erhaltenen Feinsthydroxidpulver zeichnen sich durch eine sehr niedrige Ölaufnahme aus. Der Vergleich mit kommerziell erhältlichen Produkten zeigt beim erfindungsgemäß hergestellten Produkt eine um mindestens 20% niedrigere Ölaufnahme. (Der Vergleich ist aussagekräftig, da die kommerziellen Produkte eine vergleichbare Feinheit und eine vergleichbare oder sogar grössere spezifische Oberfläche nach BET (Brunnauer, Emmet, Teller - Methode) besitzen.)

Röntgendiffraktometeraufnahmen zeigen bei dem durch das erfindungsgemäße Verfahren hergestellten Aluminiumhydroxid neben der erwarteten Kristallmodifikation Hydrargillit einen Anteil von etwa 1 % Böhmit. Dies ist dann der Fall, wenn die Heißlufttemperatur bei der Mahltrocknung > 270°C gewählt wird. Bei den zum Vergleich herangezogenen kommerziell erhältlichen, feinkristallinen Aluminiumhydroxiden handelt es sich durchgängig um reine Hydrargillite. Der Böhmitanteil befindet sich beim erfindungsgemäß hergestellten Produkt überwiegend an der Oberfläche der Partikel.

Untersucht wurde die Wasseraufnahme nach Baumann (H. Baumann, Fette, Seifen, Anstrichmittel, 68, 1966, 741-743). Dieses Verfahren wird herangezogen, um Mineralien und mineralische Füllstoffe nach der Polarität bzw. Hydrophilie abzustufen. Insbesondere wird das Verfahren angewendet, um das oberflächliche Beschichten (Coatieren) von anorganischen Füllstoffen mit organischen Additiven dahingehend zu beurteilen, ob der betreffende Füllstoff ausreichend hydrophobiert wurde. Stoffe, die viel Wasser je Masseneinheit Füllstoff aufnehmen sind demnach hydrophiler als solche die geringere Mengen Wasser aufnehmen.

Es wurden die erfindungsgemäß hergestellten Flammschutzmittel mit kommerziell hergestellten Standardprodukten verglichen. Die erfindungsgemäß hergestellten Aluminiumhydroxide zeigen eine um 36% bzw. 27% niedrigere Wasseraufnahme als die kommerziellen Vergleichsprodukte.

Die nach dem oben beschriebenen Verfahren hergestellten Produkte ließen sich einfacher in Polymere einarbeiten und führten zu besseren rheologischen Eigenschaften der Mischung als bei bisher kommerziell erhältlichen Vergleichsprodukten. Es wurde erkannt, dass die eingesetzten mineralischen Füllstoffe hydrophober als die bisher verwendeten Füllstoffe sind. Überraschenderweise zeigten die neuen Füllstoffe eine bessere Verträglichkeit mit der Polymermatrix. Je geringer die Ölaufnahme, desto weniger Polymer wird für die Benetzung der Mineraloberfläche benötigt. Wird weniger der Polymere für die Benetzung der Mineraloberfläche verbraucht, stehen mehr Polymerketten im Inneren der Matrix zum gegeneinander Abgleiten zur Verfügung. Im Resultat zeigen Polymermischungen mit Füllstoffen niedriger Ölzahl niedrigere Viskositäten als solche, die mit Füllstoffen mit hoher Ölzahl hergestellt wurden. Dies gilt für Polymerschmelzen und für bei Raumtemperatur flüssige Reaktivharze vor der vollständigen Vernetzung, auch bei hohen Füllgraden von bis zu 80%.

Arbeitet man das so charakterisierte Produkt in ein ungesättigtes Polyesterharz (kurz: UP-Harz) ein, stellt man sehr viel niedrigere Viskositäten fest als bei Mischungen, die kommerziell erhältliche Vergleichsprodukte in gleicher Konzentration enthalten. Entsprechend lassen sich mit dem erfindungsgemäß hergestellten Produkt auch höher gefüllte Mischungen herstellen, die noch sehr gut fließen. Vergleicht man relative Viskositäten, so zeigt das erfindungsgemäß hergestellte Produkt bei 50 Gew-% Füllgrad eine um rund 60% niedrigere Viskosität als die Standardprodukte.

Wenn das nach der oben beschriebenen Methode getrocknete Aluminiumhydroxid über Schmelzeverfahren in eine thermoplastische Polymermatrix eingearbeitet wird, zeigen sich im resultierenden Compound die erwartet niedrigen Schmelzeviskositäten, bestimmt als Schmelzeindex. Dieser Effekt zeigt sich mit und ohne Verwendung von gängigen niedermolekularen Phasenvermittlern, wie die am Beispiel eines Ethylvinylacetatcopolymeren (kurz: EVA oder EVA-Copolymer) und eines Aminosilans untersuchten Konzentrationsreihen zeigen (siehe Beispiel 4)). Dabei wurden feste Verhältnisse von Füllstoff und Polymer, aber variierende Anteile an Aminosilan gewählt. Verglichen wurde das erfindungsgemäß hergestellte Produkt mit kommerziell erhältlichen Standardprodukten. Wie erwartet, zeigt das erfindungsgemäß hergestellte Produkt über den gesamten Bereich einen deutlich erhöhten Schmelzeindex. Die prozentuale Erhöhung bezogen auf das Standardprodukt liegt zwischen 20 - 40%.

Mit dem erfindungsgemäß hergestellten Aluminiumhydroxid wurden Polymercompounds gebildet, welche als einfache Basispolymermischungen anwendungstechnische Bedeutung für die Verwendung als halogenfrei flammgeschütztes Kabelmantel- oder Kabelisolationsmaterial besitzen. Neben den sehr guten mechanischen und flammwidrigen Eigenschaften zeigen die resultierenden Kunststoffcompounds exzellente Schmelzeflusseigenschaften. Verglichen mit Standardprodukten aus der Gruppe der kommerziell erhältlichen, feinst kristallinen Aluminiumhydroxide ist dieser höhere Schmelzeflussindex bzw. die niedrigere Viskosität besonders auffällig.

Diese stark verbesserten Schmelzeflusseigenschaften bei hoch gefüllten Compounds ist Grundvoraussetzung dafür, hohe Extrusionsgeschwindigkeiten beim Aufbringen dieser flammgeschützten Werkstoffe auf elektrische Leiter zu ermöglichen. Im Beispiel 9) sind die bei Extrusion zweier Kunststoffmischungen auf einen Kupferleiter erhaltenen Ergebnisse gezeigt. Bei der Verarbeitung von dem erfindungsgemäß hergestellten Produkt in entsprechenden Mischungen wurde im Vergleich zum Compound, das ein kommerziell erhältliches Vergleichsprodukt enthielt, ein niedrigerer Schmelzedruck und eine niedrigere Schmelzetemperatur bei ansonsten konstanten Parametern, also gleicher Extruderschneckendrehzahl und Abzugsgeschwindigkeit, festgestellt. Dieses Ergebnis bedeutet für die mit der Extrusion vertrauten Fachpersonen, dass diese Mischung durch Erhöhung der Schneckendrehzahl bei höheren Extrusions- bzw. Abzugsgeschwindigkeiten zu isolierten Drähten bzw. Kabeln verarbeitet werden kann.

Als Option zu den niedrigen Schmelzeviskositäten bei normal hohen Füllgraden kann man auch den Füllgrad weiter erhöhen, um noch besser flammgeschützte Polymerzusammensetzungen zu erhalten. Dabei können die Schmelzeviskosität und die mechanischen Eigenschaften aber auf einem üblichen Niveau gehalten werden, was bei Verwendung von Standardprodukten nicht möglich ist.

Im Folgenden wird die Erfindung anhand mehrerer Beispiele näher erläutert. Beispiele 1 und 2 zeigen die nach dem erfindungsgemäßen Verfahren hergestellten Produkte.

Die Beispiele 3 bis 9 enthalten Vergleichsbeispiele, aus denen sich die Vorteile der erfindungsgemäß hergestellten Produkte ergeben.

### Beispiele

### Beispiel 1) und 2) beschreiben die erfindungsgemäße Herstellung der Produkte. Beispiel 1)

Der Filterkuchen eines fein kristallisierten Aluminiumhydroxids mit einer spezifischen Oberfläche von ca. 3m²/g und einer Restfeuchte von ca. 50 Gew.-% wurde in ein Mahltrocknungsaggregat über gängige Förderelemente eingebracht. Der Feststoffeintrag betrug 200kg/h. Heißluft mit einer Eintrittstemperatur von 270 - 290°C wurde zugeführt. Die Luftmenge betrug dabei 5000Bm³/h. Die Umdrehungsgeschwindigkeit des Rotors wurde auf 80 m/Sek. eingeregelt. Das getrocknete Produkt wurde über ein ausreichend dimensioniertes Produktfilter abgeschieden und mittels Zellenradschleuse ausgetragen.
Tabelle 1) fasst die wichtigsten Eigenschaften des so erhaltenen Pulvers zusammen und stellt sie den Eigenschaften dreier kommerziell erhältlicher Flammschutzmittel auf Basis von Feinstaluminiumhydroxid gegenüber. Das Vergleichsprodukt B wurde dabei auf der Basis des selben filterfeuchten Feinsthydroxides gewonnen wie das erfindungsgemäß hergestellte Produkt A.

Das erfindungsgemäß hergestellte Produkt A und die Vergleichsprodukte B, C und D wurden einem Wasseraufnahmetest nach Baumann unterzogen. Die Apparatur und das Messverfahren sind in H. Baumann, GIT -Fachzeitschrift für das Laboratorium, Heft 6, Juni 1967, S.540-542 sowie in H. Baumann, Fette, Seifen, Anstrichmitte, 68, 1966, 741-743 beschrieben.
Bild 1) zeigt die Wasseraufnahme der verglichenen Flammschutzmittel in Abhängigkeit von der Versuchsdauer. Die Produkte sind nach 5 - 15min mit Wasser gesättigt. Längere Versuchsdauer führt zu keiner weiteren Erhöhung der Wasseraufnahme. Das erfindungsgemäße Produkt A zeigt eine um mindestens 36% niedrigere Wasseraufnahme als die Vergleichsprodukte. Dieser Wert deckt sich mit den Olaufnahmewerten. Das Produkt A ist bereits mit 21% (0,21g Ölsäure auf 1 g Füllstoff) gesättigt, die kommerziell erhältlichen Produkte sind erst bei 27 - 35% gesättigt.

**Tabelle 1)**

| Eigenschaft | Methode | "4m²/g Aluminiumhydroxide" | | | |
|---|---|---|---|---|---|
| | | Produkt A | Produkt B | Produkt C | Produkt D |
| d90 (µm) | Lasergranulometrie | 0,5 | 0,5 | 0,6 | 0,6 |
| d50 (Im) | Lasergranulometrie | 1,2 | 1,4 | 1,6 | 1,6 |
| d10 (µm) | Lasergranulometrie | 2,6 | 3,2 | 3,4 | 5,3 |
| BET (m²/g) | DIN 66131 | 3,8 | 3,1 | 3,5 | 4,6 |
| Anteil Böhmit | XRD | 1 % | - | - | - |
| Feuchte (%) | DIN EN ISO 787-2 | 0,19 | 0,19 | 0,24 | 0,23 |
| Ölzahl (%) | DIN EN ISO 787-5 | 21 | 27 | 29 | 35 |
| Wasseraufnahme (ml/g) | nach Baumann | 0,43 | 0,68 | 0,68 | 0,71 |

d90 beschreibt den Korngrößenwert, für den gilt, dass 90% aller Partikeln größer sind.
d50 beschreibt den mittleren Korndurchmesser und damit den Wert, für den gilt, dass 50% aller Partikeln größer und 50% aller Partikeln kleiner sind.
d10 beschreibt den Korngrößenwert, für den gilt, dass 10% aller Partikeln größer sind.

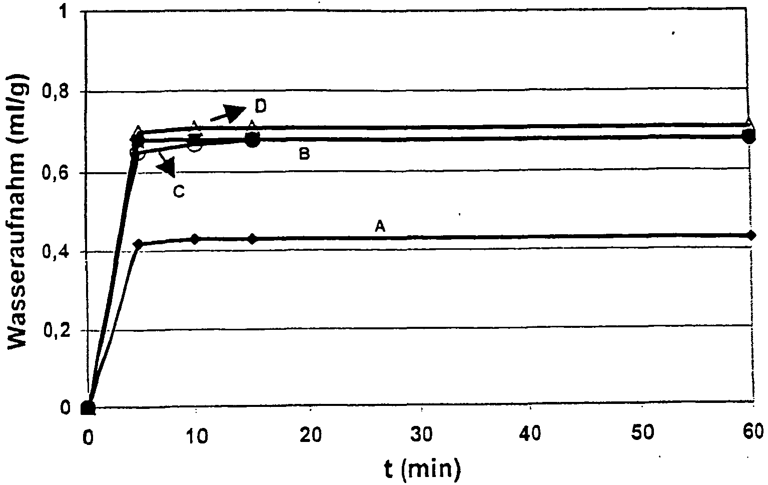

Bild 1) Wasseraufnahme nach Baumann für das erfindungsgemäß hergestellte Produkt A und die kommerziell erhältlichen Produkte B, C und D.

### Beispiel 2)

Der Filterkuchen eines fein kristallisierten Aluminiumhydroxids mit einer spezifischen Oberfläche von ca. 5m²/g und einer Restfeuchte von ca. 53 Gew.-% wurde in ein Mahltrocknungsaggregat über gängige Förderelemente eingebracht, Der Feststoffeintrag betrug 200kg/h. Heißluft mit einer Eintrittstemperatur von 250 - 280°C wurde zugeführt. Die Luftmenge betrug dabei 5000Bm³/h. Die Rotorendrehzahl wurde zwischen 2000 - 3000rpm eingeregelt. Das getrocknete Produkt wurde über ein ausreichend dimensioniertes Produktfilter abgeschieden und mittels Zellenradschleuse ausgetragen.

Tabelle 2) fasst die wichtigsten Eigenschaften des so erhaltenen Pulvers E zusammen und stellt sie den Eigenschaften des kommerziell erhältlichen Produktes F gegenüber.

Zusätzlich sind die Daten eines Produktes G aufgeführt, das auf der Basis des selben filterfeuchten Feinsthydroxides hergestellt wurde wie das erfindungsgemäß hergestellte Produkt E, allerdings nach dem Verfahren, das dem kommerziell erhältlichen Produkt F zugrunde liegt.

Das erfindungsgemäß hergestellte Produkt E und das kommerzielle Produkt F sowie Produkt G wurden einem Wasseraufnahmetest nach Baumann unterzogen. Bild 2) zeigt die Wasseraufnahme der beiden Füllstoffe in Abhängigkeit von der Versuchsdauer. Die Produkte sind nach 5 - 15min mit Wasser gesättigt. Längere Versuchsdauer führt zu keiner weiteren Erhöhung der Wasseraufnahme. Das erfindungsgemäße Produkt E zeigt eine um mindestens 27% niedrigere Wasseraufnahme als die Produkte F und G. Dieser Wert deckt sich mit den Olaufnahmewerten. Das Produkt E ist bereits mit 24%, Produkt F erst bei 34% gesättigt. Auch das Produkt G zeigt mit 31% eine um rund 30% höhere Ölzahl als das erfindungsgemäß hergestellte Produkt E.

**Tabelle 2)**

| Eigenschaft | Methode | "6m²/g | Aluminiumhydroxide" | |
|---|---|---|---|---|
| | | Produkt E | Produkt F | Produkt G |
| d90 (Im) | Lasergranulometrie | 0,5 | 0,5 | 0,6 |
| d50 (µm) | Lasergranulometrie | 0,9 | 1,1 | 1,1 |
| d10 (µm) | Lasergranulometrie | 2,6 | 2,7 | 2,4 |
| BET (m²/g) | DIN 66131 | 6,9 | 6,0 | 5,2 |
| Anteil Böhmit | XRD | 1 % | - | - |
| Feuchte (%) | DIN EN ISO 787-2 | 0,19 | 0,40 | 0,26 |
| Ölzahl (%) | DIN EN ISO 787-5 | 24 | 34 | 31 |
| Wasseraufnahme (m1/g) | nach Baumann | 0,77 | 1,00 | 0,98 |

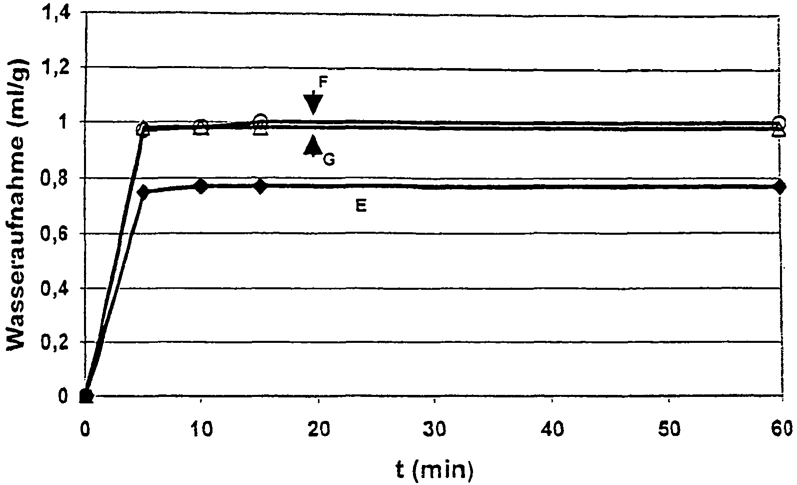

Bild 2)Wasseraufnahme nach Baumann für das erfindungsgemäß hergestellte Produkt E und die Vergleichsprodukte F und G.

### Beipiel 3)

Das erfindungsgemäß hergestellte Produkt A und die Vergleichsprodukte B, C und D wurden in Palapreg P17, ein ungesättigtes Polyesterharz, Hersteller BASF AG, eingemischt. Zum Einrühren des Füllstoff wurde ein Rührwerk des Typs IKA-RE 166 verwendet. Es wurden gleiche Massenanteile Palapreg P17 und Füllstoff 3min bei 3500Upm und anschließend nochmals 2min bei 5500 Upm eingerührt, so dass sich eine fein verteilte Mischung mit einem Füllgrad von 50 Gew.-% einstellt. Das so erhaltene gefüllte Harz wurde 2h bei 22°C thermostatisiert und anschließend in einem Brookfield RVT Viskosimeter bei 20Upm vermessen (es wurde Spindel 6 verwendet). In Tabelle 3) sind die Ergebnisse gegenübergestellt.

**Tabelle 3)**

| Flammschutzmittel | Absolute Viskosität (Pas) | Relative Viskosität |
|---|---|---|
| Ohne | 3,81 | 1 |
| Produkt A | 32,4 | 8,5 |
| Produkt B | 95,2 | 25,0 |
| Produkt C | 99,0 | 26,0 |
| Produkt D | >200* | - |

| | | |
|---|---|---|
| *hier wurde mit Spindel 7 gemessen und das Ende des Messbereichs erreicht. | | |

Produkt A zeigt die mit Abstand niedrigste Viskosität. Die Produkte B und C sind um den Faktor 3 viskoser, Produkt D lässt sich aufgrund zu hoher Viskosität mit der verwendeten Apparatur nicht mehr vermessen.

### Beispiel 4)

Das erfindungsgemäß hergestellte Produkt A und die Vergleichsprodukte wurden in ein EVA-Copolymere mit einem Vinylacetat-Gehalt von 19 Gew,-% eingearbeitet. Der Füllstoffgehalt betrug konstant 61,3 Gew.-%, der Gehalt des als Phasenvermittler verwendeten Aminosilans (Dynasylan AMEO, Hersteller Degussa AG) wurde variiert. Die Mischungen wurden auf einem Dispersionskneter Typ LDUK 1,0 der Fa. Werner und Pfleiderer hergestellt. Messungen des Schmelzeindex nach ASTM D 1238 wurden an einem Melt Flow Tester 6942 durchgeführt (190°C/21,6kg). Bild 3) zeigt den Zusammenhang für die erhaltenen Schmelzeindices.

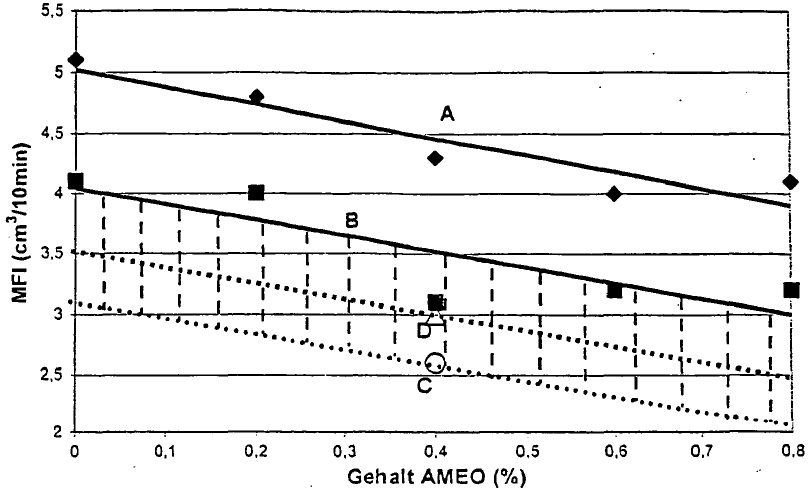

Bild 3) MFI-Werte als Funktion des Aminosilangehaltes
Produkt A zeigt durchgängig die höheren MFI-Werte. Der Verlauf der Werte für die Produkte A, B, C und D ist parallel abfallend mit zunehmenden Aminosilangehalt.

Beispiel 5) - 10) fassen Untersuchungsergebnisse zusammen, die anhand anwenderrelevanter thermoplastischer Kunststoffcompounds gewonnen wurden.

### Beispiel 5)

Die Tabelle 4) fasst die Zusammensetzung und die wichtigsten Kenndaten von auf EVA-Copolymeren mit einem Vinylacetat-Gehalt von 19 Gew.-% basierenden Kunsstoffcompounds zusammen. Die verglichenen Flammschutzmittel sind feinst kristalline Aluminiumhydroxide mit einer spezifischen Oberfläche von ungefähr 4m²/g nach BET. Die drei der erfindungsgemäß hergestellten Type gegenübergestellten Aluminiumhydroxid-Quälitäten sind kommerziell erhältliche Produkte, Die Mischung wurde auf einem Dispersionskneter Typ LDUK 1,0 der Fa. Werner und Pfleiderer hergestellt. Probekörper für die nachfolgenden Untersuchungen wurden aus Platten, die in einer Schwabenthanpresse Typ Polystat 300S im Schmelzepressverfahren hergestellt wurden, herausgestanzt. Die mechanischen Prüfungen nach DIN 53504 wurden an einer Zugprüfmaschine des Typs Tiratest 2705 durchgeführt. Schmelzeindex nach ASTM D 1238 wurden mittels Melt Flow Tester 6942, Sauerstoffindex nach ISO 4589 (ASTM D 2863) an einem FTA der Fa. Stanton Redcroft bestimmt.

**Tabelle 4)**

| | | | | |
|---|---|---|---|---|
| Zusammensetzung | 4.1 | 4.2 | 4.3 | 4.4 |
| Escorene UL 00119 | 38,3 | 38,3 | 38,3 | 38,3 |
| Dynasylan AMEO | 0,4 | 0,4 | 0,4 | 0,4 |
| Produkt A | 61,3 | | | |
| Produkt B | | 61,3 | | |
| Produkt C | | | 61,3 | |
| Produkt D | | | | 61,3 |
| | 100 | 100 | 100 | 100 |
| Zugfestigkeit (MPa) | 13,5 | 13,6 | 13,5 | 12,2 |
| Bruchdehnung (%) | 210 | 210 | 193 | 181 |
| LOI (%0₂) | 38,2 | 37,6 | 36,3 | 37,5 |
| MFI (cm³/10min) ; 21,6kg /160°C | 1,6 | 1,1 | 1,0 | 1,2 |
| MFI (cm³/10min) ; 21,6kg /190°C | 4,2 | 3,1 | 2,6 | 3,0 |

Escorene UL00119 ist ein EVA-Copolymeres der ExxonMobil. Dynasylan AMEO ist ein Aminosilander Degussa AG
Zugfestigkeit aus Spannungs-Dehnungsmessung nach DIN 53504
- Bruchdehnung: aus Spannungs-Dehnungsmessung nach DIN 53504
- LOI: Limiting oxygen Index (Sauerstoffindex) nach ISO 4589
- MFI: Melt flow Index (Schmelzeindex) nach ASTM D 1238

Der Vergleich zeigt, dass das erfindungsgemäß hergestellte Produkt A die besten Werte aller verglichenen Produkte liefert. Neben sehr guten mechanischen Eigenschaften ist der Schmelzeindex (MFI) der Formulierung 4.1 um mindestens 35% größer als bei den Vergleichsmaterialien.

### Beispiel 6)

Die Tabelle 5) fasst die Zusammensetzung und die wichtigsten Kenndaten von Kunsstoffcompounds zusammen, die auf einem EVA-Copolymeren mit einem Vinylacetat-Gehalt von 26 Gew.-% basieren. Die verglichenen Flammschutzmittel sind feinst kristalline Aluminiumhydroxide mit einer spezifischen Oberfläche von ungefähr 4m²/g nach BET. Die drei der erfindungsgemäß hergestellten Type gegenübergestellten Aluminiumhydroxid-Quälitäten sind kommerziell erhältliche Produkte. Die Herstellung der Compounds und der Prüfkörper erfolgte wie unter Beispiel 5) beschrieben.

Auch in dieser Formulierung zeigt das erfindungsgemäß hergestellte Aluminiumhydroxid den mit Abstand höchstens Schmelzeindex. Der Wert ist um mindestens 25% gegenüber den Standard-Qualitäten erhöht (siehe 5.1 verglichen mit 5.2 - 5.4).

**Tabelle 5)**

| | | | | |
|---|---|---|---|---|
| Zusammensetzung | 5.1 | 5.2 | 5.3 | 5.4 |
| Escorene UL 00226 | 38,3 | 38,3 | 38,3 | 38,3 |
| Dynasylan AMEO | 0,4 | 0,4 | 0,4 | 0,4 |
| Produkt A | 61,3 | | | |
| Produkt B | | 61,3 | | |
| Produkt C | | | 61,3 | |
| Produkt D | | | | 61,3 |
| | 100 | 100 | 100 | 100 |
| Zugfestigkeit (MPa) | 12,6 | 12,2 | 12,0 | 10,5 |
| Bruchdehnung (%) | 243 | 256 | 221 | 220 |
| LOI (%0₂) | 37,1 | 36,1 | 36,7 | 37,1 |
| MFI (cm³/10min) ; 21,6kg /160°C | 3,8 | 3,0 | 2,6 | 3,1 |
| MFI (cm³/10min); 21,6kg / 190°C | 10,6 | 8,5 | 7,0 | 7,2 |

| | | | | |
|---|---|---|---|---|
| Escorene UL00226 ist ein Produkt der ExxonMobil. | | | | |

### Beispiel 7)

Die Tabelle 6) fasst die Zusammensetzung und die wichtigsten Kenndaten von auf einem EVA-Copolymeren mit einem Vinylacetat-Gehalt von 19 Gew.-% basierenden Kunsstoffcompounds zusammen. In diesem Beispiel wurden feinst kristalline Aluminiumhydroxide mit einer spezifischen Oberfläche von ungefähr 6m²/g nach BET verglichen. Die erfindungsgemäß hergestellte Type wurde entsprechend dem unter Beispiel 2) beschriebenen Verfahren hergestellt. Gegenübergestellt wurde eine kommerziell erhältliche Aluminiumhydroxid-Qualität.

Die Herstellung der Compounds und der Prüfkörper erfolgte wie unter Beispiel 5) beschrieben.

Auch bei diesem Vergleich zeigen sich die überlegenen Schmelzeeigenschaften des erfindungsgemäß hergestellten Produktes E. Neben besseren Bruchdehnungswerten zeigt das erfindungsgemäß hergestellte Produkt E je nach Messbedingungen um mindestens 68% gegenüber Produkt F erhöhte MFI-Werte.

**Tabelle 6)**

| | | |
|---|---|---|
| Zusammensetzung | 6.1 | 6,2 |
| Escorene UL 00119 | 38,3 | 38,3 |
| Dynasylan AMEO | 0,4 | 0,4 |
| Produkt E | 61,3 | |
| Produkt F | | 61,3 |
| | 100 | 100 |
| Zugfestigkeit (MPa) | 14,7 | 14,8 |
| Bruchdehnung (%) | 173 | 152 |
| LOI (%0₂) | 42,6 | 42,7 |
| MFI (cm³/10min); 21,6kg /160°C | 1,0 | 0,5 |
| MFI (cm³/10min) ; 21,6kg /190°C | 2,7 | 1,6 |

### Beispiel 8)

Die Tabelle 7) fasst die Zusammensetzung und die wichtigsten Kenndaten von auf einem EVA-Copolymeren mit einem Vinylacetat-Gehalt von 26 Gew.-% basierenden Kunsstoffcompounds zusammen. Es wurden die beiden feinst kristallinen Aluminiumhydroxide aus Beispiel 7) mit einer spezifischen Oberfläche von ungefähr 6m²/g nach BET verglichen. Die Herstellung der Compounds und der Prüfkörper erfolgte wie unter Beispiel 5) beschrieben.

Wiederum zeigt das erfindungsgemäß hergestellte Produkt E gute mechanische Eigenschaften, einen hohen LOI Wert und sehr hohe Schmelzeindices.

**Tabelle 7)**

| | | |
|---|---|---|
| Zusammensetzung | 7.1 | 7.2 |
| Escorene UL 00226 | 38,3 | 38,3 |
| Dynasylan AMEO | 0,4 | 0,4 |
| Produkt E | 61,3 | |
| Produkt F | | 61,3 |
| | 100 | 100 |
| Zugfestigkeit (MPa) | 14,9 | 15,2 |
| Bruchdehnung (%) | 206 | 184 |
| LOI (%0₂) | 42,3 | 40,6 |
| MFI (cm³/10min) ; 21,6kg /160°C | 2,6 | 1,7 |
| MFI (cm³/10min) ; 21,6kg /190°C | 7,3 | 3,9 |

### Beispiel 9)

Die Tabelle 8) fasst die Zusammensetzung und die wichtigsten Kenndaten von auf einem PE/EVA Blend (EVA mit einem Vinylacetat-Gehalt von 26 Gew.-%) basierenden Kunsstoffcompounds zusammen. Die verglichenen Flammschutzmittel sind feinst kristalline Aluminiumhydroxide mit einer spezifischen Oberfläche von ungefähr 4m²/g nach BET. Die drei der erfindungsgemäß hergestellten Type gegenübergestellten Aluminiumhydroxid-Quälitäten sind die in Beispiel 4) und Beispiel 5) verwendeten, kommerziell erhältlichen Produkte.
Die Herstellung der Compounds und der Prüfkörper erfolgte wie unter Beispiel 5) beschrieben.

Die Ergebnisse dieses Compounds bestätigen wiederum den in den vorhergehenden Beispielen festgestellten Befund der Schmelzeindexerhöhung.

**Tabelle 8)**

| | | | | |
|---|---|---|---|---|
| Zuammensetzung | 8.1 | 8.2 | 8.3 | 8.4 |
| Exxon Mobile LL 1004 YB | 9,66 | 9,66 | 9,66 | 9,66 |
| Escorene Ultra 00226 | 29 | 29 | 29 | 29 |
| Silquest FR-693 | 0,8 | 0,8 | 0,8 | 0,8 |
| Silquest PA-826 | 0,30 | 0,30 | 0,30 | 0,30 |
| Interox TMCH-75-AL | 0,04 | 0,04 | 0,04 | 0,04 |
| Irganox 1010 | 0,20 | 0,20 | 0,20 | 0,20 |
| Produkt A | 60 | | | |
| Produkt B | | 60 | | |
| Produkt C | | | 60 | |
| Produkt D | | | | 60 |
| E | 100 | 100 | 100 | 100 |
| Zugfestigkeit (MPa) | 8,5 | 8,7 | 8,6 | 7,4 |
| Bruchdehnung(%) | 200 | 187 | 143 | 118 |
| LOI (%0₂) | 36,8 | 35,6 | 33,4 | 33,5 |
| MFI (cm/10min) ; 21,6kg /160°C | 6,8 | 5,2 | 5,1 | 5,0 |

| | | | | |
|---|---|---|---|---|
| Exxon Mobile LL 1004 YB ist ein LLDPE der ExxonMobil Silquest FR-693 ist ein Vinylsilanester der Osi Specialities Silquest PA-826 ist ein Vinyl modifiziertes Polydimethylsiloxan Interox TMCH-75-AL ist eine 75%ige Lösung von tert.-Amylperoxypivalat in Aliphaten, Hersteller Peroxid Chemie Irganox 1010 ist ein Thermostabilisätor der Ciba SC (Pentaerythritol Tetrakis3-(3,5-di-tertbutyl-4-hydroxyphenyl)propionat) | | | | |

### Beispiel 10)

Für die nachfolgenden Untersuchungen wurde als Vergleichsprodukt das mit den besten Vergleichswerten gemäß Tabelle 8 ausgewählt.

Die Tabelle 9) zeigt Ergebnisse der Spannungs-Dehnungs-Versuche und Schmelzeindexbestimmungen an Compounds der Formulierungen 8.1 und 8.2, die über ein gegenüber Beispiel 9) abgeändertes Verfahren hergestellt wurden.

Die Polymermischung wurde in diesem Falle auf einem Buss-ko-Kneter der Type MDK/E 46-11 D hergestellt. Probekörper für die mechanischen Prüfungen wurden aus extrudierten Bändern, die auf einem Einschneckenextruder (ED 30-GL der Fa. Extrudex) hergestellt wurden, gestanzt.

Sowohl die mechanischen Werte als auch der Schmelzeindex sind bei dieser Herstellweise gegenüber den in Tabelle 7) genannten Werten verbessert. Auch hier ist der hohe MFI des das erfindungsgemäß hergestellte Produkt enthaltenden Compounds hervorzuheben.

**Tabelle 9)**

| Eingesetztes Flammschutzmittel | Zugfestigkeit (MPa) | Bruchdehnung (%) | MFI (cm³/10min) 21,6kg /160°C |
|---|---|---|---|
| Produkt A | 10,2 | 258 | 9,4 |
| Produkte B | 10,4 | 264 | 5,9 |

Für die beiden so hergestellten Compounds wurden schmelzerheologische Messungen in einem Kapillarrheometer durchgeführt (Fabrikat Bohlin, Typ Rosand RH7-2, Messtemperatur 150°C). Bild 4) zeigt die Scherviskosität als Funktion der Scherrate.

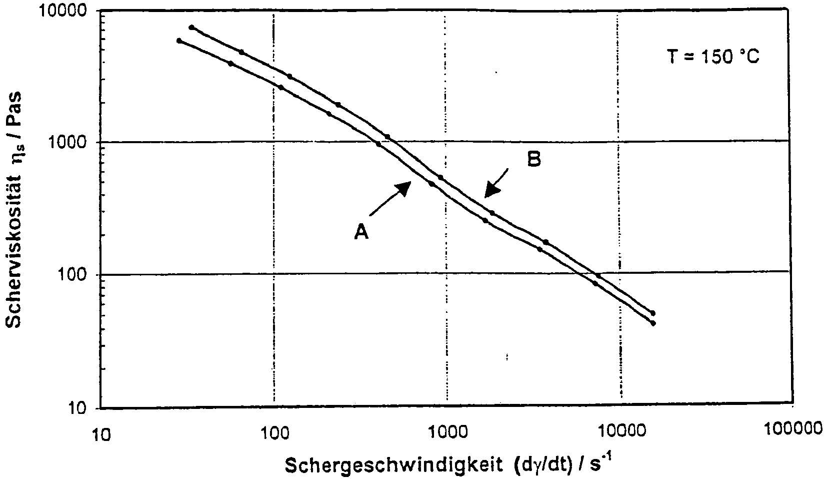

Bild 4) Scherviskosität der in Tabelle 8) aufgeführten Compounds.

In Übereinstimmung mit den MFI-Werten, zeigt die Zusammensetzung, die das erfindungsgemäß hergestellte Produkt A enthält, über den gesamten Schergeschwindigkeitsbereich eine niedrigere Schmelzeviskosität als das Vergleichsprodukt B.

Beide Kunststoffcompounds wurden zusätzlich auf einen dünnen runden Kupferleiter von 0,5mm² Querschnitt extrudiert. Diese Versuche wurden auf einem Francis Shaw Extruder ausgestattet mit einer BM-Schnecke ("Brevet Maillefer" = Maillefer Patent) durchgeführt. Die wichtigsten Versuchparameter sind in Tabelle 10) aufgeführt.

Das Compound, welches das erfindungsgemäß hergestellte Aluminiumhydroxid enthält, kann bei gleicher Abzug- bzw. Extrusionsgeschwindigkeit mit niedrigerem Druck und niedrigerer Schmelzetemperatur auf den Kupferleiter aufgebracht werden. Im Umkehrschluss gilt, dass eine erhöhte Abzugsgeschwindigkeit des isolierten Kupferdrahts durch Erhöhung der Schneckendrehzahl auf über 30Upm und damit einer Erhöhung von Schmelzedruck und - temperatur, z.B. auf das Niveau das sich beim das Vergleichsprodukt B enthaltenden Compound und 30Upm Schneckendrehzahl einstellt, möglich ist. Die Versuchsanlage, auf der die hier aufgeführten Versuche durchgeführt wurden, war allerdings nicht auf höhere Abzugsgeschwindigkeiten ausgelegt.

**Tabelle 10)**

| Füllstoff | Fest eingestellte Größen | | | Bei der Extrusion sich einstellende Parameter | |
|---|---|---|---|---|---|
| | Abzugsgeschwindigkeit | Schnecke Drezahl | DüsenDurchmesser Innen/außen | Schmelze Temperatur | Schmelze Druck |
| | (m/min) | (rpm) | (mm) | (°C) | (bar) |
| Produkt A | 650 | 30 | 0,85 / 1,4 | 151 | 750 |
| Produkt B | 650 | 30 | 0,85 / 1,4 | 168 | 800 |

## Patentansprüche

1. Verfahren zur Herstellung eines Flammschutzmittels, das entweder ein Aluminiumhydroxid mit den Stoffwerten
- spezifische Oberfläche nach BET 3 - 5 m²/g
- mittlerer Korndurchmesser d₅₀ 1,0 - 1,5 µm
- Restfeuchte 0,1 - 0,4 %
- Ölzahl 19 - 23 %
- Wasseraufnahme 0,4 - 0,6 ml/g
oder ein Aluminiumhydroxid mit den Stoffwerten
- spezifische Oberfläche nach BET 5 - 8 m²/g
- mittlerer Korndurchmesser d₅₀ 0,8 - 1,3 µm
- Restfeuchte 0,1 - 0,6 %
- Ölzahl 21 - 25 %
- Wasseraufnahme 0,6 - 0,8 ml/g
ist, **dadurch gekennzeichnet, dass** ein durch Fällung und Filtration gewonnenes filterfeuchtes Aluminiumhydroxid mit einem mittleren Korndurchmesser von 0,8 - 1,5 µm in einem turbulenten Heißluftstrom einer Mahltrocknung unterzogen wird,
wobei ein Mahltrocknungsaggregat verwendet wird, bei dem sich ein fest auf einer massiven Welle montierter Rotor mit einer Umfangsgeschwindigkeit von 40 - 140 m/sek dreht, wobei in Verbindung mit einem hohen Luftdurchsatz von 3000 - 7000Bm³/h die durchströmende Heißluft von 150 - 450°C mit einer Reynoldszahl > 3000 verwirbelt wird,
wobei unter weitgehender Beibehaltung der Korngrößenverteilung die BET-Oberfläche um mindestens 20 % vergrößert wird.

2. Verfahren nach Anspruch 1, **dadurch gekennzeichnet, dass** die Umfangsgeschwindigkeit des Rotors bei > 60 m/sek liegt, um die im filterfeuchten Aluminiumhydroxid enthaltenen Agglomerate in die Primärkristalle zu überführen.

3. Verfahren nach einem der Ansprüche 1 oder 2, **dadurch gekennzeichnet, dass** der Luftdurchsatz mehr als 5000 Bm³/h, die Temperatur > 270°C und die Umfangsgeschwindigkeit des Rotors > 70 m/sek. beträgt, wobei die Hydrargillitpartikel oberflächlich in Böhmit überführt werden.

4. Verfahren zur Herstellung einer flammgeschützte Polymerzusammensetzung durch Vermischen von
a) 20 - 60 Gew.-% eines thermoplastischen und/oder vernetzten oder vernetzbaren und/oder elastomeren Polymeren,
und
b) 40 - 80 % eines Flammschutzmittels hergestellt nach einem Verfahren gemäß einem der Ansprüche 1-3, das entweder ein Aluminiumhydroxid mit den Stoffwerten
- spezifische Oberfläche nach BET 3 - 5 m²/g
- mittlerer Korndurchmesser d₅₀ 1,0 - 1,5 µm
- Restfeuchte 0,1 - 0,4 %
- Ölzahl 19 - 23 %
- Wasseraufnahme 0,4 - 0,6 ml/g
oder ein Aluminiumhydroxid mit den Stoffwerten
- spezifische Oberfläche nach BET 5 - 8 m²/g
- mittlerer Korndurchmesser d₅₀ 0,8 - 1,3 µm
- Restfeuchte 0,1 - 0,6 %
- Ölzahl 21 - 25 %
- Wasseraufnahme 0,6 - 0,8 ml/g
ist.

5. Verfahren nach Anspruch 4, **dadurch gekennzeichnet, dass** das Aluminiumhydroxid nach 1 b) eine Hydrargillitstruktur mit zusätzlich 0,5 - 1,5 % Böhmit aufweist.

6. Verfahren nach Anspruch 4 oder 5, bei dem das unter a) beschriebene Polymer aus der Gruppe der Polyolefine, Vinylpolymere, Co- oder Terpolymere sowie gepfropften Polymethylacrylate, Natur- oder Synthesekautschuken und deren Abmischungen besteht.

## Claims

1. Process for the production of a flame retardant which is either an aluminium hydroxide with the following properties:
• specific surface area by the BET method from 3 to 5 m²/g
• d₅₀ median grain diameter from 1.0 to 1.5 µm
• residual moisture content from 0.1 to 0.4%
• oil absorption value from 19 to 23%
• water absorption from 0.4 to 0.6 ml/g
or an aluminium hydroxide with the following properties:
• specific surface area by the BET method from 5 to 8 m²/g
• d₅₀ median grain diameter from 0.8 to 1.3 µm
• residual moisture content from 0.1 to 0.6%
• oil absorption value from 21 to 25%
• water absorption from 0.6 to 0.8 ml/g,
**characterized in that** an aluminium hydroxide obtained via precipitation and filtration, and retaining the moisture from the filtration process, with median grain diameter from 0.8 to 1.5 µm, is subjected to a pulverizing drying process in a turbulent stream of hot air,
where a pulverizing drying assembly is used in which a rotor mounted fixedly on a solidly designed shaft rotates at a peripheral velocity of 40 to 140 m/sec, where, in conjunction with high air throughput of from 3000 to 7000 Bm³/h, the hot air at from 150 to 450°C flowing through the system is vortexed with a Reynolds number > 3000,
where the BET surface area is enlarged by at least 20% with substantial retention of the grain size distribution.

2. Process according to Claim 1, **characterized in that**, in order to convert the agglomerates present in the aluminium hydroxide which retains the moisture from the filtration process into the primary crystals, the peripheral velocity of the rotor is > 60 m/sec.

3. Process according to Claim 1 or 2, **characterized in that** the air throughput is more than 5000 Bm³/h, the temperature is > 270°C and the peripheral velocity of the rotor is > 70 m/sec, where the hydrargillite particles are converted superficially to boehmite.

4. Process for the production of a flame-retardant polymer composition via mixing of
a) from 20 to 60% by weight of a thermoplastic and/or crosslinked or crosslinkable and/or elastomeric polymer,
and
b) from 40 to 80% of a flame retardant produced by a process according to any of Claims 1 to 3, which is either an aluminium hydroxide with the following properties:
• specific surface area by the BET method from 3 to 5 m²/g
• d₅₀ median grain diameter from 1.0 to 1.5 µm
• residual moisture content from 0.1 to 0.4%
• oil absorption value from 19 to 23%
• water absorption from 0.4 to 0.6 ml/g
or an aluminium hydroxide with the following properties:
• specific surface area by the BET method from 5 to 8 m²/g
• d₅₀ median grain diameter from 0.8 to 1.3 µm
• residual moisture content from 0.1 to 0.6%
• oil absorption value from 21 to 25%
• water absorption from 0.6 to 0.8 ml/g.

5. Process according to Claim 4, **characterized in that** the aluminium hydroxide according to 1 b) has a hydrargillite structure with additionally from 0.5 to 1.5% of boehmite.

6. Process according to Claim 4 or 5, in which the polymer described in a) is from the group of the polyolefins, vinyl polymers, co- and terpolymers and grafted polymethacrylates, natural and synthetic rubbers and blends thereof.

## Revendications

1. Procédé servant à produire un agent retardateur de flamme, qui est soit un hydroxyde d'aluminium présentant les valeurs intrinsèques qui suivent :
- une surface spécifique selon BET de 3 - 5 m²/g ;
- un diamètre de grain moyen d₅₀ de 1,0 - 1,5 µm ;
- une humidité résiduelle de 0,1 - 0,4 % ;
- un indice d'huile de 19 - 23 % ;
- une absorption d'eau de 0,4 - 0,6 ml/g,
soit un hydroxyde d'aluminium présentant les valeurs intrinsèques qui suivent :
- une surface spécifique selon BET de 5 - 8 m²/g ;
- un diamètre de grain moyen d₅₀ de 0,8 - 1,3 µm ;
- une humidité résiduelle de 0,1 - 0,6 % ;
- un indice d'huile de 21 - 25 % ;
- une absorption d'eau de 0,6 - 0,8 ml/g,
**caractérisé en ce qu'**un hydroxyde d'aluminium humide par filtrage obtenu par précipitation et filtration, présentant un diamètre de grain moyen de 0,8 - 1,5 µm est soumis à un broyage-séchage dans un flux d'air turbulent chaud,
dans lequel un agrégat de broyage-séchage est utilisé, pour lequel un rotor monté de manière solidaire sur un arbre massif tourne à une vitesse périphérique de 40 - 140 m/sec, dans lequel l'air chaud traversant de 150 - 450 °C est tourbillonné, en lien avec un débit d'air élevé de 3 000 - 7 000 Bm³/h, à un nombre de Reynolds > 3 000, dans lequel la surface BET est agrandie d'au moins 20 % tout en conservant largement la répartition granulométrique.

2. Procédé selon la revendication 1, **caractérisé en ce que** la vitesse périphérique du rotor est de l'ordre > 60 m/sec afin de transformer les agglomérats contenus dans l'hydroxyde d'aluminium humide par filtrage en cristaux primaires.

3. Procédé selon l'une quelconque des revendications 1 ou 2, **caractérisé en ce que** le débit d'air est supérieur à 5 000 bm³/h, **en ce que** la température est > 270 °C, et **en ce que** la vitesse périphérique du rotor est > 70 m/sec, dans lequel les particules d'hydrargillite sont transformées, en surface, en boehmite.

4. Procédé servant à produire une composition polymère ignifugée en mélangeant
a) 20 - 60 % en poids d'un polymère thermoplastique et/ou réticulé ou réticulable et/ou élastomère,
et
b) 40 - 80 % d'un agent retardateur de flamme produit selon un procédé selon l'une quelconque des revendications 1 - 3, lequel est soit un hydroxyde d'aluminium présentant les valeurs intrinsèques qui suivent :
- une surface spécifique selon BET de 3 - 5 m²/g;
- un diamètre de grain moyen d₅₀ de 1,0 - 1,5 µm ;
- une humidité résiduelle de 0,1 - 0,4 % ;
- un indice d'huile de 19 - 23 % ;
- une absorption d'eau de 0,4 - 0,6 ml/g,
soit un hydroxyde d'aluminium présentant les valeurs intrinsèques qui suivant
- une surface spécifique selon BET de 5 - 8 m²/g ;
- un diamètre de grain moyen d₅₀ de 0,8 - 1,3 µm ;
- une humidité résiduelle de 0,1 - 0,6 % ;
- un indice d'huile de 21 - 25 % ;
- une absorption d'eau de 0,6 - 0,8 ml/g,

5. Procédé selon la revendication 4, **caractérisé en ce que** l'hydroxyde d'aluminium selon 1b) présente une structure d'hydrargillite comprenant en supplément 0,5 - 1,5 % de boehmite.

6. Procédé selon la revendication 4 ou 5, dans lequel le polymère décrit au point a) est issu du groupe des polyoléfines, des polymères vinyliques, des co- ou terpolymères ainsi que des polyméthylacrylates greffés, des caoutchoucs naturels ou de synthèse et de leurs mélanges.
